# FASCICULE DE BREVET EUROPEEN

(11) **EP 1 041 209 B1**
(45) Date de publication et mention de la délivrance du brevet: **16.11.2005**
(21) Numéro de dépôt: 00106633.1
(22) Date de dépôt: 28.03.2000
(51) Int. Cl.: E04B 1/94, C04B 28/14

(54) **Produit et procédé pour une isolation coupe-feu**
Produkt und Herstellungsverfahren für Feuerschutz
Product and procedure for fireproofing

(30) Priorité: 31.03.1999 IT GE990031
(43) Date de publication de la demande: 04.10.2000
(73) Titulaire: IMPRESA MARINONI srl, 16152 Genova (IT)
(72) Inventeur: Ronco, Romeo, 16124 Genova (IT)
(74) Mandataire: Maritano Maello, Giovanna

(56) Documents cités:
- EP-A- 0 366 893
- EP-A- 0 417 418
- EP-A- 0 585 200
- WO-A-00/06849
- DE-A- 19 620 600
- US-A- 2 993 016
- DATABASE WPI Section Ch, Week 199004 Derwent Publications Ltd., London, GB; Class L02, AN 1990-027087 XP002181515 & JP 01 305840 A (MARUSEN KAGAKU KK), 11 décembre 1989 (1989-12-11)

## Description

Cette invention concerne un produit ainsi que son procédé pour obtenir une isolation coupe-feu.

Selon la technique connue en particulier à bord des navires où l'isolation coupe-feu des ponts et des cloisons est obligatoire, l'isolation est obtenue par des panneaux en matériau isolant.

L'application des panneaux en ce matériau, selon la technique connue, comporte néanmoins plusieurs inconvénients.

Puisque ces panneaux connus ne sont pas rigides et ne peuvent être piétinés, ils ont le grave inconvénient qu'il est nécessaire de les poser sur la face inférieure des ponts ou sur un côté des cloisons étanches et les fixer avec des aiguilles à la structure qui doit être isolée; ces aiguilles, à cause de leur soudure interrompent le cycle de peinture anticorrosion, en outre elles constituent des points de conduction de la chaleur et elles limitent donc les caractéristiques d'isolation de ces panneaux.

Un autre inconvénient de ces panneaux connus est dû au fait qu'ils doivent être interrompus au niveau de tout élément de renforcement de la structure. Par exemple dans les navires, il y a des éléments faisant saillie de la surface inférieure des ponts, tels que les poutres renforçant la structure et les installations techniques comme la tuyauterie et les faisceaux de câbles fixés par des brides au plafond des locaux. Ces éléments en saillie doivent donc être recouverts successivement par un revêtement isolant pour assurer l'isolation coupe-feu continue comme désiré.

De plus, étant donné que, selon la technique connue, le matériau isolant doit couvrir les structures métalliques auquelles ils sont fixées par des brides, telles que les gouttières porte-câbles, conduites d'aération et tubulures et, puisque toutes ces installations sont aménagées successivement, montées, démontées, comprimées, elles entravent souvent la mise en oeuvre des panneaux isolants causant des ruptures et des réfections. Tous ces inconvénients exigent un emploi plus grand de main d'oeuvre, et ils sont cause de pertes de temps et donc de coûts plus élevés.

Un autre inconvénient des panneaux connus est la suspension de fibres qui resteront quelque temps dans le milieu de travail, libérés par la coupure des panneaux au cours de leur mise en oeuvre, pour les adapter à la structure à revêtir.

Du Brevet US-A-2993016 est déjà connu un produit pour une isolation coupe-feu constitué de plâtre, de vermiculite ou perlite expansée et d'additifs. Selon certains exemples de réalisation, on trouve la présence d'amiante.

Tous ces inconvénients ont été éliminés par le produit et le procédé d'application de cette invention tel que définis par les revendications annexées.

Cette invention a le but de réaliser un enduit ou bien une couche piétinable, ayant les caractéristiques prévues d'isolation coupe-feu.

A ce but, un produit a été étudié apte à fournir un enduit léger et incombustible qui puisse bien adhérer à des supports en acier, tôles galvanisées, aluminium, ciment, bois, faésite, plâtre etc.

Le produit objet de cette invention offre maints avantages tels que les suivants:
Un premier avantage est que le produit est appliqué déja mélangé avec de l'eau pour obtenir du mortier ayant la densité d'un commun mortier de ciment, ce qui donc élimine complètement les problèmes du milieu causés par l'émission de poussières et de fibres pendant l'application.
Un autre avantage est constitué par la mise en oeuvre très facile parce-que le mortier peut être appliqué comme une couche inférieure pour planchers ou comme un commun enduit, de façon simple, sur tout type d'ouvrage, même sur des coulisses ou des plis, de petites saillies , des conduites et d'autres éléments similaires.

L'application est beaucoup plus facile qu'avec les panneaux connus, par example lorsqu'il s'agit des ponts des navires, parce que le produit fini forme un platelage qui peut être appliqué sur la surface du pont et ses caractéristiques de poids et épaisseur sont comme ceux des produits connus ordinaires.

La mise en oeuvre du produit selon cette invention est absolument indépendante des installations, elle ne cause aucun obstacle ni des chevauchements comme ceux déplorés dans l'application de la technique connue, mais elle permet un travail facile simultané.

Un autre avantage est de nature économique car la mise en oeuvre est facile et parce qu'il ne faut pas retourner au travail déja fait pour le rétablir et/ou pour des retouches successives.

Un autre avantage du produit selon l'invention c'est qu'il n'offre pas seulement une protection contre le feu, mais a aussi des caractéristiques d'insonorisation et qu'il peut être appliqué sur les parois.

Le produit objet de l'invention n'est pas seulement incombustible, mais il offre aussi les avantages: d'être inerte, imputrescible, parfaitement résistant aux moisis et bactéries et qu'il y a aucun danger ou risque pour l'ouvrier.

Le procédé d'application du produit de cette invention peut être le suivant :

Les surfaces de la structure qu'il faut isoler doivent être prétraitées avec un convenable produit promoteur d'adhésion anticorrosif, elles doivent être sans graisse, huile, poussières et/ou matières souillantes. Avant le complet séchage du produit promoteur d'adhésion, il faut appliquer une couche du mortier comme décrit ci-dessus, sur lequel est appliqué un filet en fibre de verre qui doit être recouvert par une autre couche du mortier selon cette invention.

Après le séchage du mortier, la surface peut être refinie avec des produits de revêtement (moquette, vinyle etc.) ou avec des produits imperméabilisants ou encore embellie par des peintures communes.

Tous ces avantages et d'autres encore seront illustrés dans la description des figures suivantes annexées à titre explicatif, sans aucune limitation d'emploi.
Fig. 1 montre en section une pièce de tôle d'un pont sur lequel deux couches de mortier et le filet interposé ont été appliqués;
Fig. 2 est une vue en plan d'une part du filet interposé.

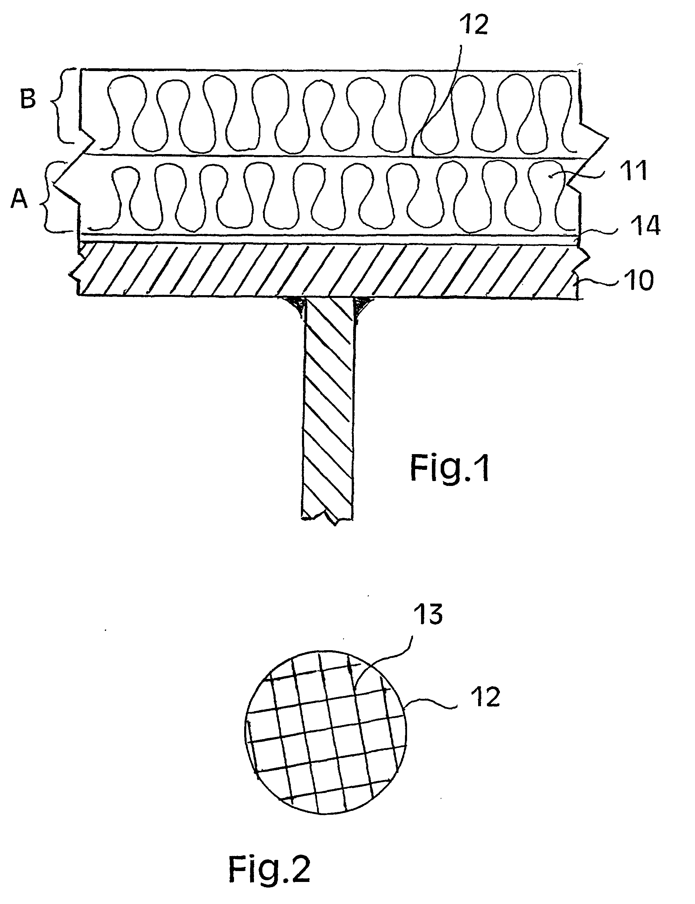

Dans la fig. 1 la tôle du pont est indiquée par 10, 11 montre la double couche de mortier appliquée sur le pont, selon l'invention. Le mortier est constitué par le produit de l'invention pré-mélangé avec de l'eau en parties égales en poids. Le filet interposé est indiqué par le numéro 12. La couche mince formée du produit promoteur d'adhésion anticorrosif est indiquée par 14.

La figure 2 montre les mailles 13 du filet 12.

Selon un exemple de mise en oeuvre de cette invention illustré par la fig. 1, sur les surfaces de la tôle 10 en acier est appliqué un produit promoteur d'adhésion anticorrosif 14 avec le nom commercial «CORLATEX ADDITIVO PRIMER» de 150µ d'épaisseur. Ce produit peut être appliqué au rouleau ou projeté.

Lorsque les surfaces sont en ciment, bois, faésite ou d'autres matériaux semblables, après avoir vérifié l'absence de pelliculage sur les surfaces sèches et dépoussiérées, une couche d'épaissseur plus grande du produit promoteur d'adhésion anticorrosif «CORLATEX ADDITIVO PRIMER» devrait être appliquée (kg 0,1/m²) pour obtenir une adhésion plus forte aussi bien que pour englober de poussières éventuellement restantes.

Le produit objet de l'invention est avantageusement constitué de sulfate hémihydrate de calcium à raison du 40% en poids, de silicates de calcium et de magnésium thermoexpansés à raison de 10% en poids, de perlite à raison de 48% en poids, et d'additifs spéciaux à raison de 2% en poids dont le promoteur d'adhésion est une résine acrylique, l'agent dispersant est de hexamétaphosphate de sodium, l'agent d'épaississement est de l'éther de polysaccharide.

Sur le promoteur d'adhésion 14 l'on applique une première couche A de mortier 11 puis un filet en fibre de verre 12 et ensuite la seconde couche B de mortier.

L'épaisseur totale de la couche de mortier 11 dépend du degré nécessaire de protection et elle peut varier de 10 à 35mm.

Dans l'exemple illustré l'épaisseur totale de 20mm. a été étendue en deux couches égales de 10mm. chacune pour assurer une protection coupe-feu du type A60, c'est à dire pour la durée de 60 minutes selon les normes internationales.

Pour appliquer le mortier 11 des machines spéciales à ravaler peuvent être employées.

Après l'application, le mortier 11 peut être lissé à la spatule spéciale. La densité du produit sec après sa mise en oeuvre, est de 495Kg/m³, sa conductibilité thermique est de 0,025Kcal/mh°C. Après la mise en oeuvre le mortier est sec après 60 minutes et l'on peut y marcher après 72 heures.

Les caractéristiques du filet 12 brut 100% en fibre de verre, peuvent varier selon les nécessités.

Selon une réalisation préférée, ses mailles carrées 13 sont constituées de fils écartés de 3,5mm, perpendiculaires entre eux, comme montré par la figure 2, le filet a un poids de 240 g/m² et une épaisseur de 0.4 mm.

Le nombre minimum total des fils dans le sens longitudinal est de 30 doubles fils par décimètre; dans le sens transversal le nombre minimum total de fils est de 27,5 fils par décimètre.

Cette invention comprend toutes les variantes de détail et les modifications qui peuvent être évidentes aux techniciens de cette branche, qui ne sortent pas de cette invention, mais sont comprises dans les revendications suivantes.

## Revendications

1. Produit pour une isolation coupe-feu **caractérisé par le fait qu'**il est constitué de plâtre (sulfate hémihydrate de calcium), de silicates de calcium et de magnésium thermoexpansés, d'éléments inorganiques tels que la perlite, et d'additifs spéciaux constitués de promoteurs d'adhésion, d' agents dispersants et d'agents d'épaississement, et **par le fait qu'**il est pré-mélangé avec de l'eau pour obtenir un mortier (11) destiné à être appliqué sur l'oeuvre à isoler (10).

2. Procédé d'application du produit selon la revendication 1 **caractérisé par le fait que** le mortier (11) est appliqué sur l'oeuvre à isoler (10) en deux couches (11A et 11B) avec un filet (12) brut, 100% en fibre de verre, posé entre ces couches.

3. Procédé d'application du produit selon la revendication 1 **caractérisé par le fait que** les surfaces de l'oeuvre à isoler doivent être pré-traitées par un produit promoteur d'adhésion anticorrosif (14).

4. Produit pour une isolation coupe-feu selon la revendication 1 **caractérisé par le fait qu'**il est constitué de sulfate hémihydrate de calcium à raison de 40% en poids, de silicates de calcium et de magnésium thermoexpansés à raison de 10% en poids, de perlite à raison de 48% en poids, et d'agents d'addition spéciaux à raison de 2% en poids, que le promoteur d'adhésion est une résine acrylique, que l'agent dispersant est hexa-métaphosphate de sodium, et l'agent d'épaississement est de l'éther de polysaccharide.

5. Procédé selon les revendications 2 ou 3 **caractérisé par le fait que** le filet (12) de 240g/m² a une épaisseur de 0,4mm., qu'il est à mailles carrées (13) constituées de fils écartés de 3,5mm, perpendiculaires entre eux, que le nombre de fils dans le sens longitudinal est de 30 doubles fils par décimètre; et que en sens transversal le nombre de fils est de 27,5 fils par decimètre.

6. Procédé selon les revendications 2 et 3 **caractérisé par le fait que** le mortier (11) doit être appliqué avant que l'agent promoteur d'adhésion (14) soit complétement sec.

7. Procédé selon la revendication (2), **caractérisé par le fait que** l'épaisseur totale du mortier (11A+11B) peut varier de 10 à 35mm.

8. Procédé selon la revendication 3 **caractérisé par le fait que** l'agent promoteur d'adhésion anticorrosif (14) est appliqué avec une épaisseur de 150µ sur les surfaces métalliques et qu'il est employé à raison de Kg.0,1/m² sur des surfaces de matériaux poreux tels que le ciment, bois, faésite et autres substances similaires.

## Patentansprüche

1. Produkt für eine Feuerschutzisolierung, **gekennzeichnet durch** die Tatsache, dass es aus Gips (Kalziumsulfathydrat), aus wärmedämmend Kalzium- und Magnesiumsilikaten, aus anorganischen Elementen wie Perlit besteht sowie aus Spezialzusatzstoffen, die aus Adhäsionspromotoren, Dispersionsmitteln und Verdickungsmitteln bestehen, und von der Tatsache, dass das vorstehend genannte Produkt mit Wasser vorgemischt wird, damit ein Mörtel (11) entsteht, der auf das zu isolierende Fabrikat aufgetragen wird.

2. Verfahren zum Auftragen des Produkts gemäß Patentanspruch 1, **gekennzeichnet durch** die Tatsache, dass der Mörtel (11) auf das zu isolierende Fabrikat (10) aufgetragen wird, und zwar in zwei Schichten (11A und 11B), mit einem unbearbeiteten Gitter (12), zu 100% aus Glasfaser bestehend, das zwischen diesen Schichten aufgebracht wird.

3. Verfahren zum Auftragen des Produkts gemäß Patentanspruch 1, **gekennzeichnet durch** die Tatsache, dass die Flächen des zu isolierenden Fabrikats mit einem Produkt vorbehandelt werden müssen, nämlich einem Rostschutz-Adhäsionspromotor (14).

4. Produkt für eine Feuerschutzisolation gemäß Patentanspruch 1, **gekennzeichnet durch** die Tatsache, dass es zu 40% aus Kalziumsulfathydrat, zu Gew.-10% aus wärmedämmend Kalzium- und Magnesiumsilikaten, zu Gew.-48% aus Perlit sowie zu Gew.-2% aus Spezialzusatzstoffen besteht, dass der Adhäsionspromotor ein Acrylharz ist, dass das Dispersionsmittel Natriumhexametaphosphat ist und dass das Verdickungsmittel ein Polysaccharidether ist.

5. Verfahren gemäß Patentanspruch 2 oder 3, **gekennzeichnet durch** die Tatsache, dass das Netz (12) zu 240 g/m² eine Dicke von 0,4 mm hat, dass es aus quadratischen Maschen (13) besteht, die wiederum von Drähten mit einem Abstand von 3,5 mm gebildet werden, rechtwinklig zueinander angeordnet, dass die Anzahl der Drähte in Längsrichtung 30 Doppeldrähte pro Dezimeter beträgt; dass die Anzahl der Drähte in Querrichtung 27,5 Drähte pro Dezimeter beträgt.

6. Verfahren gemäß Patentanspruch 2 und 3, **gekennzeichnet durch** die Tatsache, dass der Mörtel (11) aufgetragen werden muss, bevor der Adhäsionspromotor (14) vollständig getrocknet ist.

7. Verfahren gemäß Patentanspruch 2, **gekennzeichnet durch** die Tatsache, dass die Gesamtdicke des Mörtels (11A+11B) zwischen 10 und 35 mm schwanken kann.

8. Verfahren gemäß Patentanspruch 3, **gekennzeichnet durch** die Tatsache, dass der Rostschutz-Adhäsionspromotor (14) in einer Dicke von 150 µ auf die Metallflächen aufgetragen wird und dass er in einem Verhältnis von 0,1 kg/m² auf porösen Materialien wie Zement, Holz, Pressholz und ähnlichen Substanzen angewandt wird.

## Claims

1. Product for fireproofing, **characterized by** the fact that it is constituted of plaster (calcium sulphate hemidrate), thermally expanded calcium and magnesium silicates, and of inorganic elements, such as pearlite, as well as of special additives consisting of adhesion promoting, dispersing and thickening agents, and **characterized by** the fact that such product is pre-mixed with water to produce mortar (11) designed to be applied on the work to be insulated (10).

2. Application procedure of the product according to claim 1, **characterized by** the fact that the mortar (11) is applied on the work to be insulated (10) in two layers (11A and 11B), by means of a coarse 100% glass fiber net (12) which is placed in between the two layers.

3. Application procedure of the product according to claim 1, **characterized by** the fact that the surfaces of the work to be insulated must be pre-treated with a corrosion-proof adhesion promoting agent (14).

4. Product for fireproofing according to claim 1, **characterized by** the fact that calcium sulphate hemidrate accounts for 40% of its weight, thermally expanded calcium and magnesium silicates account for 10% of its weight, pearlite for 48% of its weight, and special additives for 2% of its weight, that the adhesion promoting agent is an acrylic resin, the dispersing agent is sodium exametaphosphate, and the thickening agent is a polysaccharide ether.

5. Procedure according to claims 2 or 3, **characterized by** the fact that the 240 g/m² net (12) is 0.4 mm thick, that it consists of square meshes (13) formed by perpendicular wires with 3.5 mm center distance, that longitudinally there are 30 double wires per decimeter; and that transversally there are 27.5 wires per decimeter.

6. Procedure according to claims 2 and 3, **characterized by** the fact that the mortar (11) must be applied before the adhesion promoting agent (14) has fully dried up.

7. Procedure according to claim 2, **characterized by** the fact that the overall mortar (11A+11B) thickness may range between 10 and 35 mm.

8. Procedure according to claim 3, **characterized by** the fact that the corrosion-proof adhesion promoting agent (14) is applied with a 150 µ thickness on metal surfaces and that it is applied by an amount of kg 0.1/m² on porous surfaces such as concrete, wood, faesite, and other similar substances.
